# FASCICULE DE BREVET EUROPEEN

(11) **EP 3 065 954 B1**
(45) Date de publication et mention de la délivrance du brevet: **12.12.2018**
(21) Numéro de dépôt: 14803055.4
(22) Date de dépôt: 28.10.2014
(51) Int. Cl.: B60B 19/00

(54) **ROBOT TERRESTRE DE TRANSPORT MODULAIRE, PROCÉDÉ DE MONTAGE ET UTILISATION**
ERDTRANSPORT MODULARE ROBOT, MONTAGE VERFAHREN UND VERWENDUNG.
MODULAR TRANSPORT LAND ROBOT, METHOD FOR THE ASSEMBLY AND USE THEREOF

(30) Priorité: 08.11.2013 FR 1360943
(43) Date de publication de la demande: 14.09.2016
(73) Titulaire: Sera Ingenerie, 91140 Villebon sur Yvete (FR)
(72) Inventeur: CROSNIER, François Sylvain, F-78960 Voisins le Bretonneux (FR); TROCHET, Stéphane, F-91300 Massy (FR)
(74) Mandataire: Junca, Eric
(86) Numéro de dépôt international: PCT/EP2014/073052
(87) Numéro de publication internationale: WO 2015/067502

(56) Documents cités:
- WO-A2-2006/124554
- DE-A1- 3 841 971
- US-A- 4 621 562
- US-A- 5 012 879
- US-A- 5 323 867
- US-A- 6 134 734
- US-A1- 2006 178 085
- US-A1- 2012 279 529

## Description

### DOMAINE TECHNIQUE

L'invention se rapporte à un robot terrestre de transport réalisé selon une architecture modulaire permettant une grande adaptabilité aux besoins.

L'utilisation de robots intervient avantageusement lorsque le recours à un conducteur ou un opérateur humain comporte des inconvénients ou des dangers. Le pilotage est alors réalisé à distance par radiocommande. Ainsi, lorsque la tâche à effectuer comporte des risques du fait de sa nature, par exemple le déminage, ou du lieu où elle s'exerce, par exemple pour une observation ou une analyse sur un site pollué.

Les progrès de l'électronique et de l'informatique ont permis le développement de minirobots adaptés à des tâches de plus en plus complexes, avec une première génération de développement focalisée sur de petits robots de masse variant entre quelques kilogrammes à quelques dizaines kilogrammes, pouvant atteindre jusqu'à environ une centaine de kilogrammes. Ces robots sont en général créés sur mesure, pour chaque type d'application, à partir de composants industriels disponibles sur étagère.

Pour de nombreuses autres applications, il conviendrait de pouvoir disposer de robots de taille moyenne, capables de mettre en oeuvre des systèmes plus lourds, plus volumineux, mais aussi plus consommateurs d'énergie. Par rapport aux minirobots, le domaine visé de préférence est celui des machines de moyenne gamme, de gabarit comparable à celui des véhicules automobiles avec une masse à vide se situant autour de 1000 kg, par exemple entre environ 500 et 1500 kg, et pouvant transporter une charge utile se chiffrant en plusieurs centaines de kilogrammes.

Ces besoins sont particulièrement répandus dans la lutte contre les mines et les pièges (en particulier engins explosifs improvisés ou IED, initiales de « improvised explosive devices » en anglais), ou comme soutien aux sections de fantassins (transport de servitude). De nombreux usages civils se profilent également, avec le même besoin de systèmes plus lourds et volumineux, comme dans le domaine du bâtiment. Il peut s'agir de moyens de mesure (laboratoires embarqués), de manipulation (bras, mini-pelle), de moyens d'observation déportés (optique et optronique sur mât ou sur bras) ou encore de relais à l'utilisation de petits robots, pour leur apporter le surplus de moyens qui leur manque en les transportant, en les approvisionnant en énergie, et en leur offrant un relais de transmissions de données.

Un exemple typique de cette dernière catégorie d'application est celui des interventions sur site pollué (chimie, nucléaire, gaz) où un robot de taille moyenne - à grand rayon d'action - peut transporter sur ce site un robot électrique plus petit, en le rechargeant et en relayant ses communications. En effet, les minirobots n'ont pas une autonomie suffisante pour accéder sur le site et y opérer dès que la zone d'exclusion de toute présence humaine dépasse quelques centaines de mètres.

### ÉTAT DE LA TECHNIQUE

Les minirobots sont décrits dans de nombreux documents de brevet, par exemple dans les publications US 4 621 562, US 2004/0216933, US20120279529 US ou EP 2 617 631. Les robots de taille moyenne connus, en général à l'état de prototypes, ont un mode de construction se déduisant de celui des minirobots par un changement d'échelle. En particulier, le report de la charge utile reste situé au-dessus du robot lui-même, et les organes de structure, de motorisation et de mobilité du robot occupent l'essentiel de la zone comprise entre les roues ou les chenilles.

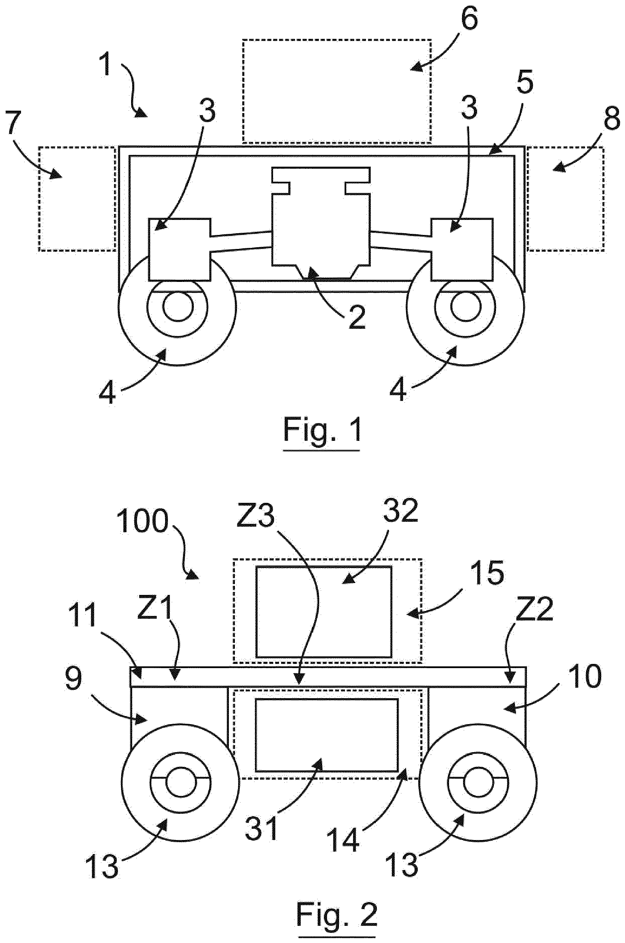

La vue latérale de la figure 1 illustre un tel robot construit comme un ensemble 1. Cet ensemble 1 comprend les organes de motorisation 2, de transmission 3, les trains de roulement 4 et une structure porteuse 5 qui enveloppe l'ensemble. La place laissée pour la charge utile 6 est au-dessus de l'ensemble 1 et éventuellement dans des zones situées en porte-à-faux avant 7 ou arrière 8.

Le robot apparaît comme un engin « monobloc », peu adapté pour satisfaire aux multiples applications évoquées ci-dessus. Cette catégorie de robots de moyen tonnage se trouve en fait à la charnière entre deux types de motorisation : une motorisation électrique - version agrandie des motorisations de minirobots - et une motorisation thermique généralement héritées du domaine des quads ou de véhicules tout-terrain à roues motrices.

Dans le premier type, l'autonomie est limitée par l'emport de batteries qui ont l'inconvénient majeur d'un stockage d'énergie à très faible énergie massique ou volumique (environ 500 Wh/kg pour des batteries Li-ion contre environ 10 000 Wh/kg pour un carburant). Ces robots ont en général plusieurs moteurs électriques (un par roue ou par train de roues), ce qui, ajouté à la masse, augmente le handicap du volume utilisé par les batteries.

Dans le cas des robots dérivés des quads, les moteurs utilisés imposent une organisation particulière: moteur unique au centre couplé à des arbres de transmission dirigés vers des ponts situés à l'avant et à l'arrière du véhicule. Or, ce type d'organisation se prête mal à une adaptabilité pour des applications variées.

Ainsi, de manière générale, les volumes disponibles sur de telles constructions sont limités. Pour chaque application, des coûts complets d'étude et de réalisation sont alors à prévoir. De plus, ces robots sont souvent construits avec un recours limité aux banques d'organes existantes pour les véhicules car leurs concepteurs viennent classiquement du domaine de la robotique.

### EXPOSÉ DE L'INVENTION

L'invention vise à réaliser des robots de moyenne gamme en masse, permettant de répondre à des besoins apparemment contradictoires, à savoir :
- une construction simplifiée à partir d'un grand nombre d'organes industriels disponibles sur étagère, et
- une capacité à être déclinés en un nombre important de versions, chacune adaptée à un type d'application spécifique.

Pour ce faire, l'invention propose de rompre avec les architectures de type minirobot ou véhicule tout-terrain en réalisant une architecture de robot autour d'une structure porteuse longitudinale en position haute, compatible avec un positionnement central de la charge utile au regard de la répartition des masses, et des modules propulseurs implantés sous cette poutre haute.

Plus précisément, la présente invention a pour objet un robot terrestre de transport modulaire, comportant un module porteur sous forme de poutre longitudinale ayant deux zones d'extrémité et une zone centrale de support, un module de télécommande destiné à piloter le robot, et une motorisation modulaire composée d'au moins deux groupes de mobilité indépendants comportant au moins un groupe propulseur porté par au moins l'une et l'autre des zones d'extrémité de ladite poutre longitudinale et fixés, en mode utilisation, sous ces zones d'extrémité par des modules d'arrimage. Le ou chaque groupe propulseur comporte au moins un moteur thermique ou électrique, une transmission et un un train de roulement. Lesdits groupes de mobilité définissent entre eux, sous la zone centrale de la poutre longitudinale porteuse, un volume disponible destiné à transporter au moins un module de charge utile, de sorte que la poutre longitudinale porteuse est située, en mode utilisation, au-dessus des groupes propulseurs.

Un groupe de mobilité au sens du présent texte est soit groupe propulseur soit une structure équivalente mais non propulsive, c'est-à-dire sans groupe moteur, tout en restant apte à intégrer un train de roulement à roues non motrices mais pouvant être directionnelles.

Selon la présente invention, la charge utile est positionnée au centre du robot, entre les groupes de mobilité, si bien que la variation de la distance entre cette charge et le sol est minimisée lorsque le robot se déplace, ce qui ne peut pas se produire lorsque cette charge utile est disposée en porte-à-faux avant ou arrière.

Cet effet est particulièrement utile dans des applications de détection en direction du sol - en particulier des antennes de détection de métaux enfouis sous le sol, d'antennes de radars à pénétration de sol ou d'analyseur de neutrons - le capteur étant agencé au voisinage du sol. L'invention assure alors une constance raisonnable de la distance de ce capteur par rapport au sol et évite de placer ces antennes en porte-à-faux avant ou arrière du robot, ce qui les rendrait plus sensibles aux mouvements de tangage du véhicule. Dans d'autres applications, comme par exemple pour embarquer des minirobots, il est également avantageux de pouvoir disposer d'un volume utile au voisinage du sol.

Par ailleurs, des applications demandent de disposer de capteurs ou d'effecteurs agencés le plus haut possible en position surélevée, afin de pouvoir visionner au loin dans le cas de missions d'observation avec des caméras de tout type, ou de missions de détection s'appuyant sur des antennes aériennes (antennes radar en particulier). La solution selon la présente invention permet alors de disposer d'une structure porteuse suffisamment haute pour ériger ces caméras ou ces antennes - à partir de modules de fixation agencés sur la poutre longitudinale - ce qui permet d'optimiser l'observation ou la détection.

De plus, des avantages complémentaires sont apportés par la position centrale de la charge utile : les extrémités du véhicule sont libérées de la présence de capteurs, antennes, etc., en porte-à-faux avant ou arrière, donc encombrants et vulnérables. Cette disposition centrale facilite alors les franchissements, les demi-tours, et permet d'évoluer en environnement hostile ou comportant des obstacles. En outre, la charge utile installée en position centrale peut plus facilement s'adapter à une inversion du sens de marche et le robot peut alors opérer indifféremment en marche avant ou en marche arrière. Enfin, la disposition centrale de la charge utile libère aux extrémités avant et/ou arrière la possibilité d"adapter au robot un timon ou bras permettant son remorquage derrière un véhicule classique.

Selon des modes de mise en oeuvre particuliers :
- la charge utile peut être agencée sur et/ou sous la zone centrale de la poutre longitudinale porteuse, selon les besoins de la charge utile ;
- le robot ayant une longueur hors-tout, la poutre longitudinale porteuse a une longueur sensiblement égale à ladite longueur hors-tout ;
- les trains de roulement sont des trains à roues, au moins l'un des trains de roulement possédant au moins deux roues ;
- le module d'arrimage de chaque groupe de mobilité est constitué d'une structure en matériau avantageusement métallique ou composite, de construction avantageusement tubulaire ou en coque, enveloppant le groupe de mobilité, supportant le train de roulement et étant fixée sous la poutre longitudinale ;
- chaque groupe propulseur possède avantageusement une réserve d'énergie autonome, à savoir un réservoir de carburant par groupe propulseur thermique et un accumulateur électrique par groupe propulseur électrique;
- la motorisation peut être choisie entre purement thermique, purement électrique et hybride électrique/thermique ;
- au moins une interface de fixation mécanique et une interface d'alimentation électrique, destinées à au moins une charge utile du module de charge utile, sont implantées sur et/ou sous la poutre longitudinale porteuse, la présence d'au moins deux groupes propulseurs permettant une fourniture d'énergie électrique optimisée ;
- l'un des groupes propulseurs est apte à fournir de l'énergie électrique à l'interface d'alimentation électrique, et un autre groupe propulseur est apte à fournir de l'énergie électrique à une charge utile et/ou un module de mission comportant des systèmes d'observation et/ou de détection, en particulier des caméras, des capteurs et/ou des radars;
- le module de télécommande destiné à piloter le robot, le cas échéant apte à piloter au moins par exemple une charge utile et/ou les moyens d'observation et/ou de détection, l'interface d'alimentation électrique d'au moins une charge utile et/ou un module de traitement de données sont logés dans la poutre longitudinale porteuse ;
- un groupe propulseur est apte à fournir le module de télécommande en énergie électrique et un autre groupe propulseur est apte à fournir au moins une charge utile en énergie électrique et/ou mécanique;
- la motorisation, choisie entre une motorisation à propulsion thermique, hybride, et électrique, comprend deux groupes propulseurs différents ou identiques (9, 10) ayant chacun un train de roulement (13) et pouvant fonctionner soit à deux roues motrices (12), soit à quatre roues motrices ;
- la motorisation hybride peut commuter entre une propulsion à deux roues motrices, selon une propulsion soit électrique, avec les roues entraînées par le groupe propulseur électrique, soit thermique avec les roues entraînées par le groupe propulseur thermique, et une propulsion à quatre roues motrices entraînées par les deux groupes propulseurs;
- les roues de, au moins, l'un des groupes de mobilité sont aptes à être directrices, de sorte que le robot possédé un ou plusieurs trains de roulement directeur ;
- la direction de chaque roulement directeur est asservie à des lois de déplacement gérées par le module de traitement de données en liaison avec les moyens de visualisation et/ou de détection ;
- des moyens de remorquage sont agencés en liaison avec une extrémité de la poutre, ces moyens de remorquage pouvant être choisis entre un timon mécaniquement articulé et un timon motorisé piloté par le module de télécommande robot, ce timon étant destiné à être couplé à un système de connexion adapté, comportant en particulier une boule ou un crochet d'attelage.

La grande variété de missions pour des travaux conséquents, peut être avantageusement prise en charge par un robot selon l'invention. Un tel robot dispose en effet d'une morphologie adaptée aux charges utiles destinées à ces missions, en utilisant une poutre longitudinale porteuse de dimension prédéterminée et deux groupes de mobilité aux extrémités permettant de libérer un espace entre les zones d'extrémité et un volume entre les groupes propulseurs au-dessus et/ou en-dessous de ladite poutre et correspondant à cette charge, sans devoir procéder à de nouveaux développements particuliers de robot.

L'implantation de groupes de mobilité indépendants sous la poutre longitudinale n'ayant aucun lien mécanique entre eux permet aussi d'adapter leur écartement facilement en réalisant des poutres longitudinales plus ou moins longues selon chaque besoin particulier. Il est donc facile de réaliser à faible coût des robots adaptés en espace libre et en longueur à leur emploi particulier. Le robot peut se construire « au mètre ».

L'invention se rapporte également à un procédé de montage du robot terrestre de transport modulaire défini ci-dessus. Ce procédé consiste :
- à régler la longueur d'une poutre longitudinale porteuse formant un module porteur, en fonction des longueurs d'un module de motorisation et d'une charge utile ;
- à munir des zones d'extrémité de ladite poutre d'interfaces de fixation de modules de fixation pour arrimer des groupes propulseurs du module de motorisation sous ces zones ;
- à munir une zone centrale de ladite poutre d'au moins une interface de fixation du module de fixation, pour fixer une charge utile d'un module de charge sous ladite poutre, et d'un module d'interface d'alimentation électrique,
- à fixer un groupe propulseur électrique ou thermique du module de motorisation au moins sous chaque zone d'extrémité de ladite poutre via les interfaces de fixation et à connecter l'interface d'alimentation électrique du module d'alimentation électrique à au moins un groupe propulseur via un connecteur de distribution,
- à fixer le module de charge utile sous la zone centrale de ladite poutre via l'interface de fixation du module de fixation et à connecter l'interface d'alimentation électrique au module de charge utile via un connecteur d'alimentation, et
- à monter un module de télécommande du robot dans un logement réalisé préalablement à cet effet dans ladite poutre et sur cette poutre via le module de fixation, le module de télécommande étant également connecté au module d'interface d'alimentation électrique.

Selon des modes de mise en oeuvre préférés :
- une charge utile du module de charge est fixée sur la poutre longitudinale porteuse via une interface de fixation du module de fixation, cette charge utile pouvant comporter des systèmes de détection et/ou des systèmes d'observation ;
- le module d'interface d'alimentation électrique est connecté au module de charge utile comportant la charge utile fixée sous la poutre longitudinale porteuse et/ou la charge utile fixée sur ladite poutre ;
- les systèmes de détection et/ou des systèmes d'observation sont connectés directement à un connecteur de distribution électrique d'un groupe propulseur, qu'il soit thermique ou électrique.

L'invention a également pour objet l'utilisation d'un robot tel que défini et tel que monté selon les caractéristiques ci-dessus, en particulier pour les applications suivantes :
- des applications de détection d'objets enfouis sous le sol, d'embarquement d'au moins un minirobot, et d'observation et/ou de détection en position surélevée ;
- applications d'emport de modules d'action, comme des postes de désignation, d'acquisition ou de prise à partie, les servitudes pouvant alors avantageusement être implantées dans le volume situé sous la poutre porteuse ;
- des applications d'observation et/ou de manipulation d'objets comportant un mât érigeable ou un bras déployable, les composants hydrauliques et/ou électriques de ces mâts ou bras pouvant avantageusement êtres implantés dans le volume situé sous la poutre porteuse.

### PRÉSENTATION DES FIGURES

D'autres données, caractéristiques et avantages de la présente invention apparaîtront à la lecture de la description non limitée qui suit, en référence aux figures annexées qui représentent, respectivement :
- la figure 1, une vue latérale schématique d'un robot « monobloc » de l'état de la technique;
- la figure 2, une vue latérale schématique d'un exemple de base d'un robot selon l'invention;
- la figure 3, une vue de face schématique du robot selon la figure 2 avec une poutre intégrant les organes d'un module de télécommande ;
- la figure 4, une vue en coupe d'un exemple de groupe propulseur à moteur thermique du robot selon la figure 2 ;
- la figure 5, une vue en coupe d'un exemple de groupe propulseur à moteur électrique du robot selon la figure 2 ;
- les figures 6a à 6c, des vues latérales d'exemples de configurations de robot selon l'invention combinant plusieurs longueurs de poutre longitudinale et plusieurs types de motorisation : thermique, hybride et électrique ;
- la figure 7, une vue latérale d'un exemple de robot selon l'invention comportant une motorisation modulaire composée de trois groupes propulseurs ;
- la figure 8, une vue latérale d'un exemple de robot selon l'invention équipé d'interfaces électrique et mécaniques pour l'intégration de charges utiles fixées sur et sous la poutre longitudinale porteuse ;
- la figure 9, une vue supérieure d'un robot selon l'invention équipé de deux trains de roulement à roues directrices, et
- les figures 10 et 11, des vues latérales d'un robot selon l'invention attelé à un véhicule respectivement par un timon et par l'intermédiaire d'une remorque équipée d'un essieu.

### DESCRIPTION DETAILLÉE

Le terme « longitudinal » qualifie dans le présent texte ce qui est pris dans le sens de la dimension principale, appelée « longueur », dans laquelle s'étend le robot ou la poutre porteuse selon l'invention.

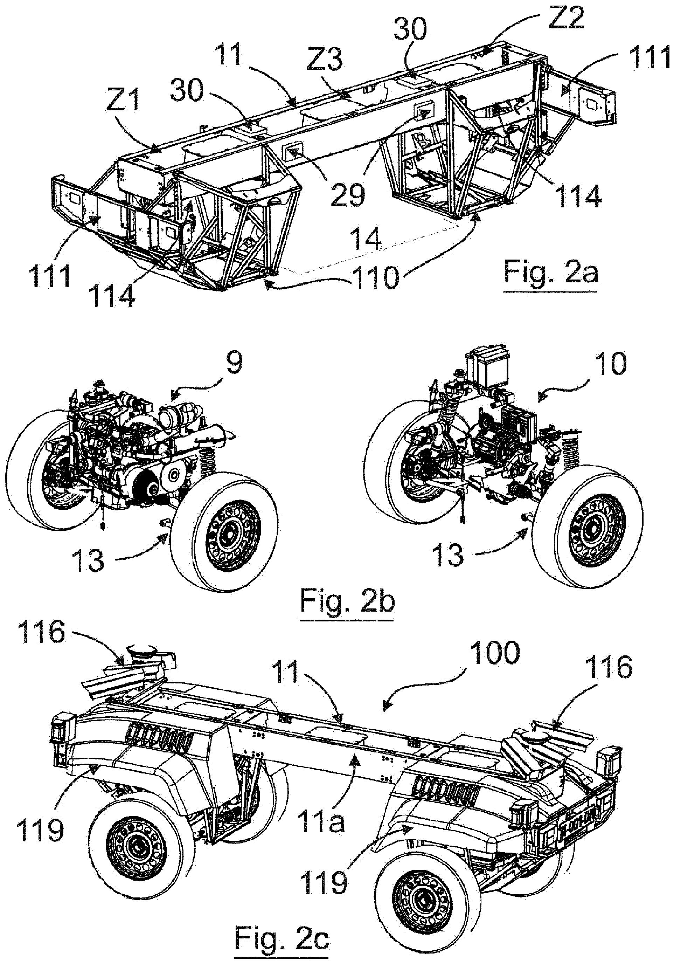

En référence à la figure 2, la vue latérale présentée illustre schématiquement une manière de réaliser un robot 100 selon l'invention. Deux groupes propulseurs 9 et 10, respectivement thermique et électrique, sont fixés sous les zones d'extrémités Z1 et Z2, respectivement avant et arrière, d'une poutre longitudinale 11, de forme parallélépipédique rectangle,. Chaque groupe propulseur est associé à un train de roulement à roues 13.

Une charge utile 31 est fixée sous la poutre 11 pour être disposée dans un volume 14 située entre les groupes propulseurs 9 et 10, en regard de la zone centrale Z3 de la poutre 11. Alternativement ou simultanément, la charge 31 ou une autre charge 32 peut être prévue sur la poutre 11 pour pouvoir être disposée dans un emplacement 15 situé au-dessus de la poutre. La charge 32 peut être un appareillage fixé sur la poutre 11, via une fixation appropriée, ou être transportée sans être fixée mais optionnellement attachée, par exemple dans le cas d'une personne. Les fixations des charges sont avantageusement libérables.

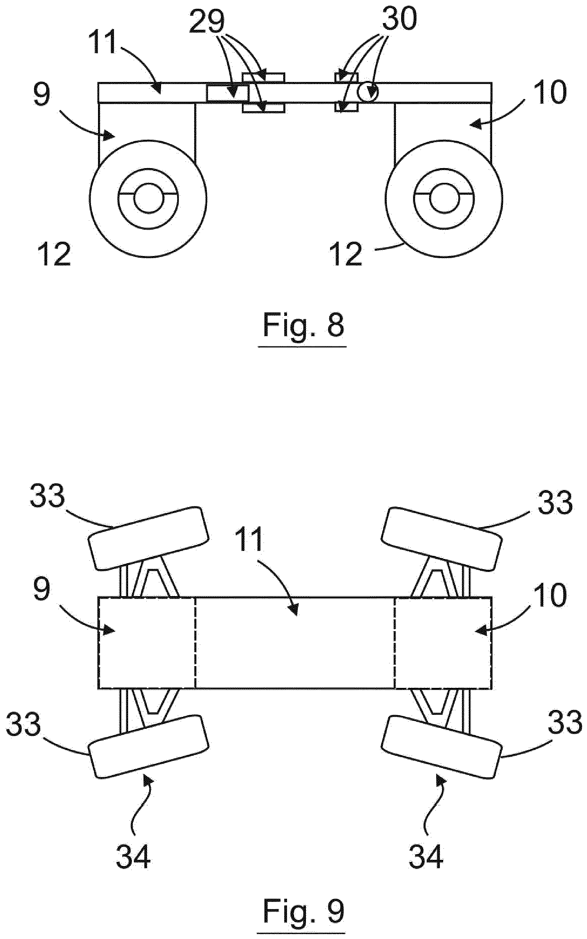

Le montage d'un tel robot 100 passe par les étapes suivantes, illustrées par les figures 2A à 2C :
- découpage de la poutre longitudinale 11 selon une longueur correspondant à la somme des longueurs du module de motorisation, ici constitué par des groupes propulseurs 9 et 10 (figures 2B), et celle d'une charge utile à intégrer dans le volume 14;
- des unités d'arrimage 110 ici tubulaires, ou alternativement en coque métallique ou composites sont fixés en regard des zones d'extrémité Z1 et Z2 de la poutre longitudinale 11, pour arrimer les groupes propulseurs 9 et 10 sous ces zones et, avantageusement, des pare-chocs 111 sont fixés aux extrémités de la poutre 11 ;
- la zone centrale Z3 de ladite poutre 11 est ensuite munie d'interfaces de fixation 29, pour fixer notamment une charge utile sous ladite poutre 11, et d'une interface d'alimentation électrique 30 (voir également la description en référence à la figure 8) ;
- puis les groupes propulseurs thermique 9 et électrique 10 sont arrimés dans chaque unité 111, fixés à la poutre 11 via des interfaces de fixation 114 et connectés par l'interface d'alimentation électrique 30 au groupe propulseur électrique 10 via un connecteur de distribution (non représenté);
- les trains de roulement 13 sont montés sur les groupes propulseurs 9 et 10 ;
- la charge utile est alors fixée sous la zone centrale Z3 de ladite poutre 11 via l'interface de fixation 29 et connectée par l'interface d'alimentation électrique 30 à la charge utile via un connecteur d'alimentation (non représenté), et
- un module de télécommande 116 du robot 100 (Figure 2C) est intégré dans un logement de ladite poutre 11, le module de télécommande étant également connecté à l'interface d'alimentation électrique 30.

Afin de protéger les groupes propulseurs 9 et 10, des carters de protection en matériau métallique ou plastique en variante sont accrochés aux flancs latéraux 11a de la poutre 11.

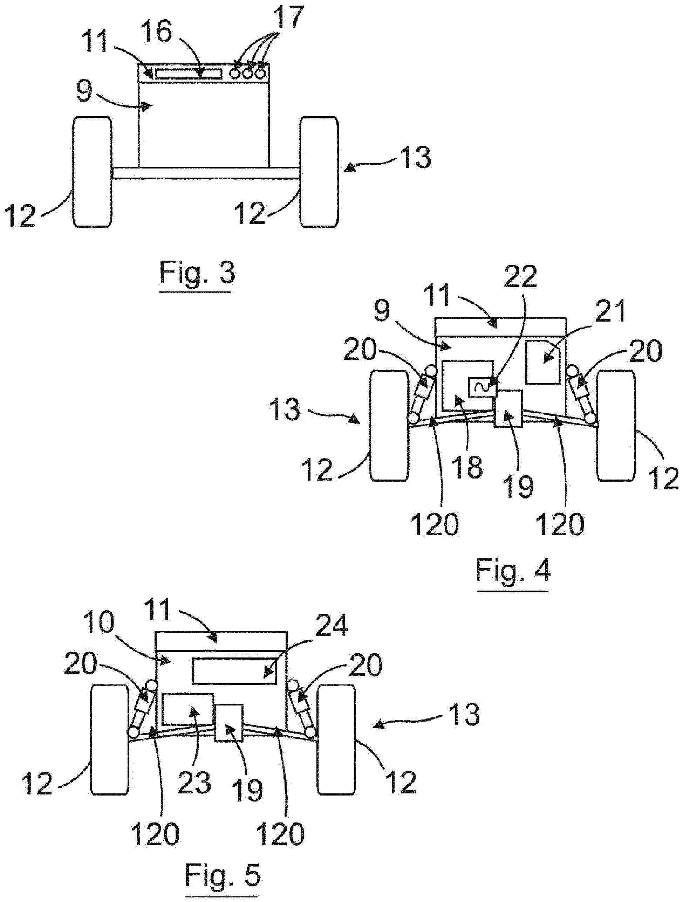

La vue de face schématique du robot selon la figure 3 montre l'implantation, dans des logements formés dans la poutre longitudinale 11, d'organes de télécommande destinés à piloter le robot 100 (figure 2) et d'autres éléments embarqués (dispositifs d'observation, de détection ou toute charge utile à commande à distance). Ces organes de télécommande comportent des boitiers électroniques et unité de traitement numérique de données 16, faisceaux électriques et électroniques 17. La composition d'un train de roulement 13 est détaillée sur la vue en coupe de la figure 4, qui précise également la composition du groupe propulseur à moteur thermique 9 - ici un moteur diesel - fixé en liaison avec la zone avant Z1 (figure 2) de la poutre 11.

Sur cette figure 4, il apparaît que le train de roulement 13 se compose de deux roues 12, d'axes de transmission 120 - en liaison avec la boîte de transmission 19 du groupe propulseur 9 - et de deux suspensions 20. Le groupe propulseur 9 fixé sur la poutre 11 comporte : un moteur thermique 18 - ici un moteur diesel - la boîte de transmission 19, un réservoir de carburant 21 et une génération d'énergie électrique 22, ici un alternateur.

L'autre groupe propulseur électrique 10 est illustré sur la vue en coupe de la figure 5. Cette figure 5 montre la composition du groupe propulseur 10 : un moteur électrique 23, d'une transmission 19 - semblable à celle du moteur diesel 18 (figure 4) - et d'une batterie 24. Le train de roulement 13 est avantageusement identique à celui du moteur diesel (figure 4) avec, notamment, ses roues 12 et ses suspensions 20.

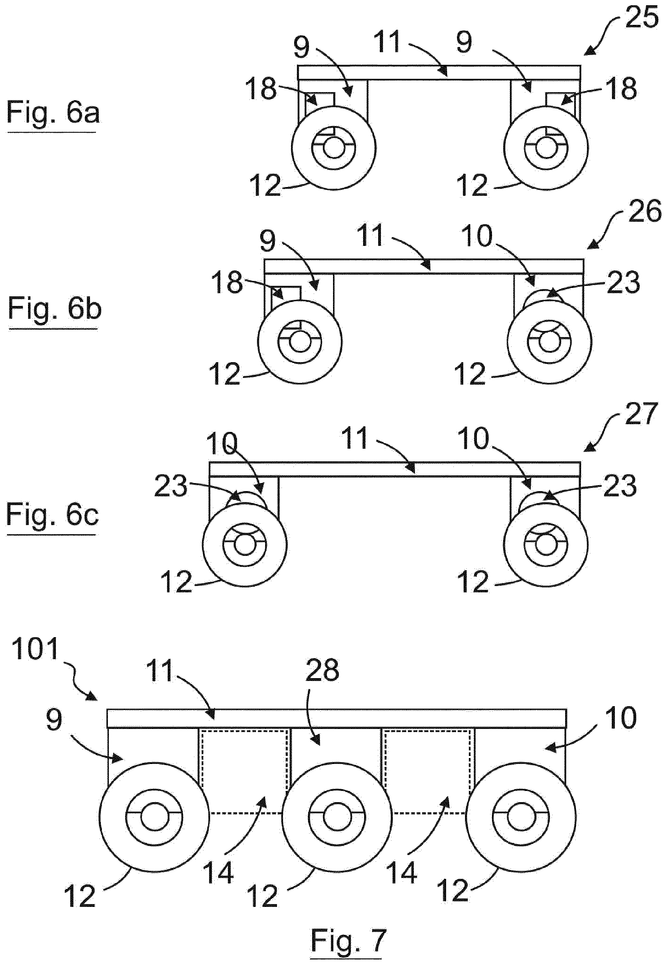

Des modules de motorisation variés sont illustrés sur les vues latérales des figures 6a à 6c, en combinaison avec des poutres 11 de longueur variable. Sur la figure 6a, le module de motorisation 25 est thermique et se compose de deux groupes propulseurs thermiques 9 construits autour de moteurs thermiques 18.

En référence à la figure 6b, le module de motorisation 26 est hybride, comme celui du robot 100 représenté sur les figures 2 à 5, avec groupe propulseur thermique 9 et un groupe propulseur électrique 10, réalisés respectivement autour d'un moteur thermique 18 et d'un moteur électrique 23. Sur la figure 6c, le module de motorisation 27 se compose de deux groupes propulseurs électriques 10, chaque groupe étant basé sur un moteur électrique 23.

Le robot selon l'invention peut avoir plus de deux groupes propulseurs, par exemple trois groupes propulseurs 9, 28, 10 comme le robot 101 illustré par la vue latérale de la figure 7. Dans ce cas, la poutre longitudinale 11 a une longueur suffisante pour implanter le troisième groupe propulseur central 28, qui peut être thermique ou électrique selon la mission, entre les groupes propulseurs 9 et 10, eux-mêmes implantés aux extrémités de la poutre 11, comme dans l'exemple de la figure 2.

Les volumes disponibles 14 définis entre les groupes propulseurs 9, 28 et 10 permettent d'intégrer des charges utiles sous la poutre 11. Le groupe propulseur central 28, qui peut être thermique ou électrique, peut être positionné à mi-distance entre les groupes propulseurs 9 et 10, comme illustré par la figure 7, ou alternativement rapproché de l'un des groupes propulseurs 9 ou 10.

Afin de faciliter l'intégration des charges utiles, au-dessus ou en-dessous de la poutre longitudinale 11, celle-ci est équipée d'interfaces comme illustré par la vue latérale de la figure 8. La zone centrale Z3 de la poutre 11 (figure 2) est ainsi équipée d'interfaces mécaniques 29 et d'interfaces électriques 30 : ces interfaces 29 et 30 se situent sous la poutre longitudinale 11, sur le dessus et les flancs 11a de celle-ci.

De plus, les trains de roulement peuvent être directeurs afin de faciliter le déplacement du robot. La vue supérieure de la figure 9 montre que les deux trains de roulement 34 du robot de la figure 2, associés aux groupes propulseurs 9 et 10, sont directeurs et disposent de roues directrices 33. Les stratégies de braquage de ces roues directrices 33 sont adaptées aux besoins et aux situations de conduite en liaison avec des lois intégrées dans l'unité de traitement numérique des données 16 (figure 3).

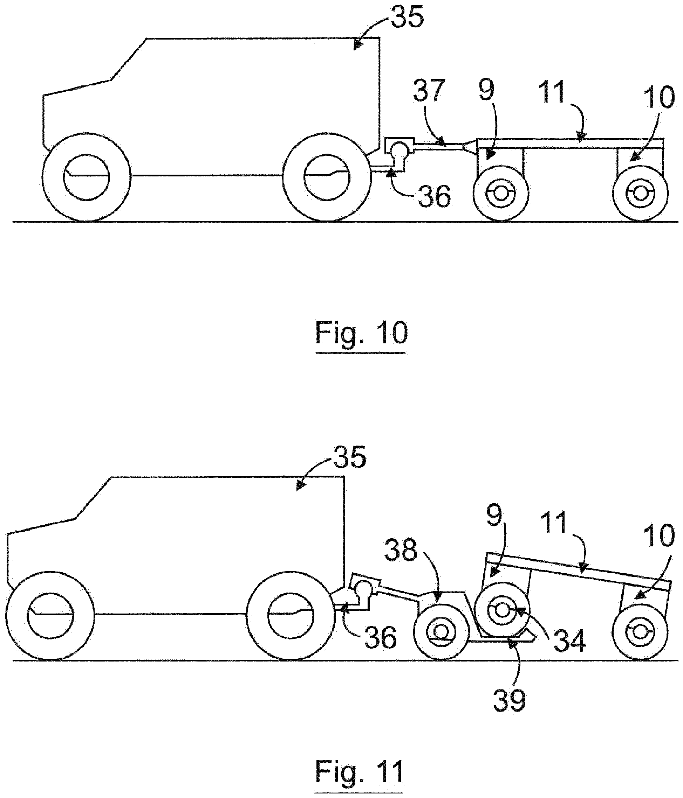

En outre, le robot selon l'invention peut être avantageusement remorqué soit pour l'amener à proximité de son lieu d'exploration soit pour le rapatrier en cas de panne. La vue latérale de la figure 10 montre le robot 100 de la figure 2 attelé à un véhicule 35 par son attelage 36. Le remorquage est réalisé à l'aide d'un timon 37 articulé et relié à une extrémité de la poutre 11 du robot 100. Ce timon 37 peut être manipulé manuellement par un opérateur ou être motorisé de façon à pouvoir atteler le robot 100 de façon télécommandée.

En variante, la vue latérale de la figure 11 montre un robot tracté par un véhicule 35 par l'intermédiaire d'une remorque 38 équipée d'un essieu comportant un réceptacle 39 sur lequel le robot 100 vient poser un train de roulement 34. Cette opération peut être réalisée soit par télécommande soit en vue directe, par un pupitre de commande du robot 100.

L'invention n'est pas limitée aux exemples de réalisation décrits et représentés. Ainsi, il est possible d'ajouter tout module utile pour une mission spécifique, par exemple des phares ou des caméras infrarouges pour des robots dédiés aux déplacements de nuit.

Par ailleurs, il est possible de prévoir des moyens d'accrochage entre robots ou entre un robot et une remorque.

De plus, l'invention s'applique à de nombreux domaines, en particulier lorsque le terrain n'est pas aisément accessible : domaines du loisir, des interventions en cas d'accident, de contrôle et d'analyse de sol.

En outre, chaque train de roulement peut avoir une, deux ou plus de deux roues, pourvu qu'au moins un train de roulement possède au moins deux roues.

## Revendications

1. Robot terrestre de transport modulaire (100, 101), comportant un module porteur sous forme de poutre longitudinale (11) ayant deux zones d'extrémité (Z1, Z2) et une zone centrale de support (Z3), un module de télécommande (116) destiné à piloter le robot (100, 101), et une motorisation modulaire (25, 26, 27) composée d'au moins deux groupes de mobilité indépendants (9, 10, 28) comportant au moins un groupe propulseur porté par au moins l'une et l'autre des zones d'extrémité (Z1, Z2) de ladite poutre longitudinale (11) et fixés, **caractérisé en ce que**, en mode utilisation, sous ces zones d'extrémité (Z1, Z2) par des modules d'arrimage (110), **en ce que** le ou chaque groupe propulseur comporte au moins un moteur thermique (18) ou électrique (23), une transmission (120) et un train de roulement (13, 34), et **en ce que** lesdits groupes de mobilité (9, 10, 28) définissent entre eux, sous la zone centrale (Z3) de la poutre longitudinale porteuse (11), un volume disponible (14) destiné à transporter au moins un module de charge utile (31, 32), de sorte que la poutre longitudinale porteuse (11) est située, en mode utilisation, au-dessus des groupes propulseurs (9, 10, 28).

2. Robot terrestre selon la revendication 1, dans lequel la charge utile (31, 32) peut être agencée sur et/ou sous la zone centrale (Z3) de la poutre longitudinale porteuse (11).

3. Robot terrestre selon l'une quelconque des revendications 1 ou 2, dans lequel le robot ayant une longueur hors-tout, la poutre longitudinale porteuse (11) a une longueur sensiblement égale à ladite longueur hors-tout.

4. Robot terrestre selon l'une quelconque des revendications précédentes, dans lequel les trains de roulement (13, 34) sont des trains à roues (12, 33), au moins l'un des trains de roulement possédant au moins deux roues (12, 33).

5. Robot terrestre selon l'une quelconque des revendications précédentes, dans lequel le module d'arrimage (110) de chaque groupe propulseur (9, 10, 28) est constitué d'une structure enveloppant le groupe propulseur (9, 10, 28) et supportant le train de roulement (12, 13), la structure étant fixée sous la poutre longitudinale (11).

6. Robot terrestre selon l'une quelconque des revendications précédentes, dans lequel chaque groupe propulseur (9, 10, 28) possède une réserve d'énergie autonome, à savoir un réservoir de carburant (21) par groupe propulseur thermique (9, 28) et un accumulateur électrique (24) par groupe propulseur électrique (10, 28).

7. Robot terrestre selon l'une quelconque des revendications précédentes, dans lequel la motorisation peut être choisie entre purement thermique (25), purement électrique (27) et hybride électrique/thermique (26).

8. Robot terrestre selon l'une quelconque des revendications précédentes, dans lequel au moins une interface de fixation mécanique (29) et une interface d'alimentation électrique (30), destinées à au moins une charge utile (31, 32) du module de charge utile, sont implantées sur et/ou sous la poutre longitudinale porteuse (11).

9. Robot terrestre selon la revendication précédente, dans lequel l'un des groupes propulseurs (9, 10, 28) est apte à fournir de l'énergie électrique à l'interface d'alimentation électrique (30), et un autre groupe propulseur (9, 10, 28) est apte à fournir de l'énergie électrique à une charge utile et/ou un module de mission comportant des systèmes d'observation et/ou de détection, en particulier des caméras, des capteurs et/ou des radars.

10. Robot terrestre selon l'une quelconque des revendications précédentes, dans lequel le module de télécommande (116) destiné à piloter le robot (100, 101), le cas échéant apte à piloter au moins une charge utile (31, 32) et/ou les moyens d'observation et/ou de détection, l'interface d'alimentation électrique (30) d'au moins une charge utile (31, 32) et/ou un module de traitement de données (16), sont logés dans la poutre longitudinale porteuse (11).

11. Robot terrestre selon l'une quelconque des revendications précédentes, dans lequel un groupe propulseur (9, 10, 28) est apte à fournir le module de télécommande (116) en énergie électrique et un autre groupe propulseur (9, 10, 28) est apte à fournir au moins une charge utile (31, 32) en énergie électrique et/ou mécanique.

12. Robot terrestre selon l'une quelconque des revendications précédentes, dans lequel la motorisation choisie entre une motorisation thermique (25), hybride (26), et électrique (27) comprend deux groupes propulseurs différents ou identiques (9, 10) ayant chacun un train de roulement (13) et pouvant fonctionner soit à deux roues motrices (12), soit à quatre roues motrices.

13. Robot terrestre selon la revendications précédente, dans lequel, la motorisation hybride (26), peut commuter entre une propulsion à deux roues motrices, selon une propulsion soit électrique, avec les roues entraînées uniquement par le groupe propulseur électrique (10), soit thermique avec les roues entraînées uniquement par le groupe propulseur thermique (9), et une propulsion à quatre roues motrices (12) entraînées par les deux groupes propulseurs (9, 10).

14. Robot terrestre selon l'une quelconque des revendications précédentes à deux groupes propulseurs, dans lequel les roues (33) de l'un au moins des groupes propulseurs (9, 10) sont aptes à être directrices de sorte que le robot (100) possède un ou plusieurs trains de roulement directeurs (34).

15. Robot terrestre selon l'une quelconque des revendications précédentes, dans lequel la direction de chaque roulement directeur est asservie à des lois de déplacement gérées par le module de traitement de données (16) en liaison avec les moyens de visualisation et/ou de détection.

16. Robot terrestre selon l'une quelconque des revendications précédentes, dans lequel des moyens de remorquage (37) sont agencés en liaison avec une extrémité de la poutre (11), ces moyens de remorquage pouvant être choisis entre un timon mécaniquement articulé et un timon motorisé piloté par le module de télécommande robot, ce timon étant destiné à être couplé à un système de connexion adapté (36), comportant en particulier une boule ou un crochet d'attelage.

17. Procédé de montage du robot terrestre de transport modulaire selon l'une quelconque des revendications précédentes, **caractérisé en ce qu'**il consiste :
- à régler la longueur d'une poutre longitudinale porteuse formant un module porteur (11), en fonction des longueurs d'un module de motorisation (25, 26, 27) et d'une charge utile (31, 32);
- à munir des zones d'extrémité (Z1, Z2) de ladite poutre (11) d'interfaces de fixation (114) de modules de fixation pour arrimer des groupes propulseurs (9, 10, 28) du module de motorisation (25, 26, 27) sous ces zones (Z1, Z2);
- à munir une zone centrale (Z3) de ladite poutre (11) d'au moins une interface de fixation (29) du module de fixation, pour fixer une charge utile (31, 32) d'un module de charge sous ladite poutre (11), et d'un module d'alimentation électrique (30),
- à fixer un groupe propulseur électrique (9, 28) ou thermique (10, 28) du module de motorisation au moins sous chaque zone d'extrémité (Z1, Z2) de ladite poutre (11) via les interfaces de fixation (114) et à connecter l'interface d'alimentation électrique (30) du module d'alimentation électrique à au moins un groupe propulseur (9, 10, 28) via un connecteur de distribution (115),
- à fixer le module de charge utile (31) sous la zone centrale de ladite poutre (11) via l'interface de fixation (29) du module de fixation et à connecter l'interface d'alimentation électrique (30) au module de charge utile (31) via un connecteur d'alimentation, et
- à monter un module de télécommande (116) du robot dans un logement réalisé préalablement à cet effet dans ladite poutre (11) et sur cette poutre (11) via le module de fixation, le module de télécommande (116) étant également connecté au module d'interface d'alimentation électrique (30).

18. Procédé de montage selon la revendication précédente, dans lequel une charge utile (32) du module de charge est fixée sur la poutre longitudinale porteuse (11) via une interface de fixation (29) du module de fixation, cette charge utile (32) pouvant comporter des systèmes de détection et/ou des systèmes d'observation.

19. Procédé de montage selon l'une quelconque des revendications 17 ou 18 précédente, dans lequel le module d'interface d'alimentation électrique (30) est connecté au module de charge utile comportant la charge utile (31) fixée sous la poutre longitudinale porteuse (11) et/ou la charge utile (32) fixée sur ladite poutre (11).

20. Procédé de montage selon l'une quelconque des revendications 17 à 19, dans lequel les systèmes de détection et/ou des systèmes d'observation sont connectés directement à un connecteur de distribution électrique d'un groupe propulseur (9, 10, 28), en particulier d'un groupe propulseur électrique (10, 28).

21. Utilisation du robot selon l'une quelconque des revendications 1 à 16 et monté selon l'une quelconque des revendications 17 à 20, pour des applications de détection d'objets enfouis sous le sol, d'embarquement d'au moins un minirobot, et d'observation et/ou de détection en position surélevée.

22. Utilisation du robot selon l'une quelconque des revendications 1 à 16 et monté selon l'une quelconque des revendications 17 à 20, pour des applications d'emport de modules d'action, comme des postes de désignation, d'acquisition ou de prise à partie, les servitudes pouvant alors avantageusement être implantées dans le volume (14) situé sous la poutre porteuse.

23. Utilisation du robot selon l'une quelconque des revendications 1 à 16 et monté selon l'une quelconque des revendications 17 à 20 pour des applications d'observation et/ou de manipulation d'objets comportant un mât érigeable ou un bras déployable, les composants hydrauliques et/ou électriques de ces mâts ou bras pouvant avantageusement êtres implantés dans le volume (14) situé sous la poutre porteuse.

## Patentansprüche

1. Modularer Transportlandroboter (100, 101) umfassend ein Trägermodul in der Form eines Längsträgers (11) mit zwei Endbereichen (Z1, Z2) und einem Auflagemittelbereich (Z3), ein zum Steuern des Roboters (100, 101) ausgebildetes Fernsteuerungsmodul (116), und eine modulare Motorisierung (25, 26, 27) bestehend aus wenigstens zwei unabhängigen Mobilitätsgruppen (9, 10, 28) umfassend wenigstens eine von wenigstens der einen und der anderen der Endbereiche (Z1, Z2) des Längsträgers (11) getragene Antriebsgruppe und befestigt, **dadurch gekennzeichnet, dass** im Nutzungsmodus unter den Endbereichen (Z1, Z2) durch Befestigungsmodule (110), und dass die oder jede Antriebsgruppe wenigstens einen Verbrennungsmotor (18) oder Elektromotor (23), ein Getriebe (120) und ein Fahrwerk (13, 34) umfasst, und dass die Mobilitätsgruppen (9, 10, 28) zwischen sich unter dem Mittelbereich (Z3) des Längsträgers (11) ein zum Transportieren von wenigstens einem Nutzlastmodul (31, 32) ausgebildetes verfügbares Volumen (14) definieren, so dass der Längsträger (11) im Nutzungsmodus oberhalb der Antriebsgruppen (9, 10, 28) angeordnet ist.

2. Landroboter nach Anspruch 1, wobei die Nutzlast (31, 32) auf und/oder unter dem Mittelbereich (Z3) des Längsträgers (11) angeordnet sein kann.

3. Landroboter nach Anspruch 1 oder 2, wobei der Roboter eine Länge über alles aufweist und der Längsträger (11) eine Länge im Wesentlichen gleich der Länge über alles aufweist.

4. Landroboter nach einem der vorhergehenden Ansprüche, wobei die Fahrwerke (13, 34) Räderfahrwerke (12, 33) sind, wobei wenigstens eines der Fahrwerke wenigstens zwei Räder (12, 33) umfasst.

5. Landroboter nach einem der vorhergehenden Ansprüche, wobei das Befestigungsmodul (110) von jeder Antriebsgruppe (9, 10, 28) aus einer die Antriebsgruppe (9, 10, 28) umgebenden und das Fahrwerk (12, 13) stützenden Struktur besteht, wobei die Struktur unter dem Längsträger (11) befestigt ist.

6. Landroboter nach einem der vorhergehenden Ansprüche, wobei jede Antriebsgruppe (9, 10, 28) eine autonome Energiereserve aufweist, das heißt einen Kraftstofftank (21) pro Verbrennungsmotor-Antriebsgruppe (9, 28) und einen Akkumulator (24) pro elektrischer Antriebsgruppe (10, 28).

7. Landroboter nach einem der vorhergehenden Ansprüche, wobei die Motorisierung gewählt werden kann zwischen ausschließlich einem Verbrennungsmotorantrieb (25), ausschließlich einem Elektromotorantrieb (27) und einem Elektro-/Verbrennungsmotor-Hybridantrieb (26).

8. Landroboter nach einem der vorhergehenden Ansprüche, wobei wenigstens eine mechanische Befestigungsschnittstelle (29) und eine elektrische Versorgungsschnittstelle (30), vorgesehen für wenigstens eine Nutzlast (31, 32) des Nutzlastmoduls, auf und/oder unter dem Längsträger (11) angeordnet sind.

9. Landroboter nach dem vorhergehenden Anspruch, wobei eine der Antriebsgruppen (9, 10, 28) zum Liefern von elektrischer Energie für die elektrische Versorgungsschnittstelle (30) ausgebildet ist und eine andere Antriebsgruppe (9, 10, 28) zum Liefern von elektrischer Energie für eine Nutzlast und/oder ein Missionsmodul umfassend Beobachtungs- und/oder Erfassungssysteme, insbesondere Kameras, Sensoren und/oder Radare, ausgebildet ist.

10. Landroboter nach einem der vorhergehenden Ansprüche, wobei das Fernsteuerungsmodul (116) zum Steuern des Roboters (100, 101), gegebenenfalls ausgebildet zum Steuern wenigstens einer Nutzlast (31, 32) und/oder der Beobachtungs- und/oder Erfassungsmittel, die elektrische Versorgungsschnittstelle (30) von wenigstens einer Nutzlast (31, 32) und/oder ein Datenverarbeitungsmodul (16) im Längsträger (11) angeordnet sind.

11. Landroboter nach einem der vorhergehenden Ansprüche, wobei eine Antriebsgruppe (9, 10, 28) zum Versorgen des Fernsteuerungsmoduls (116) mit elektrischer Energie ausgebildet ist und eine andere Antriebsgruppe (9, 10, 28) zum Versorgen wenigstens einer Nutzlast (31, 32) mit elektrischer und/oder mechanischer Energie ausgebildet ist.

12. Landroboter nach einem der vorhergehenden Ansprüche, wobei die zwischen einem Verbrennungsmotorantrieb (25), einem Hybridantrieb (26) und einem Elektroantrieb (27) gewählte Motorisierung zwei verschiedene oder identische Antriebsgruppen (9, 10) umfasst, die jeweils ein Fahrwerk (13) aufweisen und mit zwei Antriebsrädern (12) oder mit vier Antriebsrädern funktionieren können.

13. Landroboter nach dem vorhergehenden Anspruch, wobei die Hybridmotorisierung (26) zwischen einem Antrieb mit zwei Antriebsrädern bei einem Elektroantrieb, bei dem die angetriebenen Räder ausschließlich von der elektrischen Antriebsgruppe (10) angetrieben werden, oder einem Verbrennungsmotorantrieb, bei dem die angetriebenen Räder ausschließlich von der Verbrennungsmotor-Antriebsgruppe (9) angetrieben werden, und einem Antrieb mit von den zwei Antriebsgruppen (9, 10) angetriebenen vier Antriebsrädern (12) wechseln kann.

14. Landroboter nach einem der vorhergehenden Ansprüche mit zwei Antriebsgruppen, wobei die Räder (33) von wenigstens einer der Antriebsgruppen (9, 10) ausgebildet sind, lenkbar zu sein, so dass der Roboter (100) eines oder mehrere Lenkfahrwerke (34) aufweist.

15. Landroboter nach einem der vorhergehenden Ansprüche, wobei die Lenkung von jedem Lenkfahrwerk vom Datenverarbeitungsmodul (16) in Verbindung mit den Visualisierungs- und/oder Erfassungsmitteln verwalteten Bewegungsregeln unterliegt.

16. Landroboter nach einem der vorhergehenden Ansprüche, wobei Schleppmittel (37) in Verbindung mit einem Ende des Trägers (11) angeordnet sind, wobei diese Schleppmittel zwischen einer mechanisch angelenkten Deichsel und einer vom Roboter-Fernsteuerungsmodul gesteuerten motorisierten Deichsel gewählt werden können, wobei die Deichsel zum Koppeln an ein geeignetes Verbindungssystem (36) umfassend insbesondere eine Anhängerkugel oder einen Anhängerhaken ausgebildet ist.

17. Verfahren zur Montage des modularen Transportlandroboters nach einem der vorhergehenden Ansprüche, **dadurch gekennzeichnet, dass** es umfasst:
- Regeln der Länge eines ein Trägermodul (11) bildenden Längsträgers gemäß den Längen eines Motorisierungsmoduls (25, 26, 27) und einer Nutzlast (31, 32),
- Ausstatten der Endbereiche (Z1, Z2) des Trägers (11) mit Befestigungsschnittstellen (114) von Befestigungsmodulen zum Befestigen der Antriebsgruppen (9, 10, 28) des Motorisierungsmoduls (25, 26, 27) unter diesen Bereichen (Z1, Z2),
- Ausstatten eines Mittelbereichs (Z3) des Trägers (11) mit wenigstens einer Befestigungsschnittstelle (29) des Befestigungsmoduls zum Befestigen einer Nutzlast (31, 32) eines Lastmoduls unter dem Träger (11) und eines Stromversorgungsmoduls (30),
- Befestigen eines Elektroantriebs (9, 28) oder Verbrennungsmotorantriebs (10, 28) des Motorisierungsmoduls wenigstens unter jedem Endbereich (Z1, Z2) des Trägers (11) über die Befestigungsschnittstellen (114) und Verbinden der Stromversorgungsschnittstelle (30) des Stromversorgungsmoduls mit wenigstens einer Antriebsgruppe (9, 10, 28) über einen Verteilungssteckverbinder (115),
- Befestigen des Nutzlastmoduls (31) unter dem Mittelbereich des Trägers (11) über die Befestigungsschnittstelle (29) des Befestigungsmoduls und Verbinden der Stromversorgungsschnittstelle (30) mit dem Nutzlastmodul (31) über einen Versorgungssteckverbinder, und
- Montieren eines Fernsteuerungsmoduls (116) des Roboters in einer vorab zu diesem Zweck in den Träger (11) ausgeführten Aufnahme und auf diesem Träger (11) durch das Befestigungsmodul, wobei das Fernsteuerungsmodul (116) ebenfalls mit dem Stromversorgungsschnittstellen-Modul (30) verbunden ist.

18. Montageverfahren nach dem vorhergehenden Anspruch, wobei eine Nutzlast (32) des Lastmoduls auf dem Längsträger (11) über eine Befestigungsschnittstelle (29) des Befestigungsmoduls befestigt ist, wobei die Nutzlast (32) Erfassungssysteme und/oder Beobachtungssysteme umfassen kann.

19. Montageverfahren nach Anspruch 17 oder 18, wobei das Stromversorgungsschnittstellen-Modul (30) mit dem die unter dem Längsträger (11) befestigte Nutzlast (31) und/oder die auf dem Träger (11) befestigte Nutzlast (32) umfassenden Nutzlastmodul verbunden ist.

20. Montageverfahren nach einem der Ansprüche 17 bis 19, wobei die Erfassungssysteme und/oder Beobachtungssysteme direkt mit einem Stromverteilungssteckverbinder einer Antriebsgruppe (9, 10, 28), insbesondere einer elektrischen Antriebsgruppe (10, 28), verbunden sind.

21. Nutzung des Roboters nach einem der Ansprüche 1 bis 16, der nach einem der Ansprüche 17 bis 20 montiert ist, zu Zwecken der Erfassung von im Boden verborgenen Objekten, des Verladens wenigstens eines Miniroboters und des Beobachtens und/oder Erfassens in erhöhter Position.

22. Nutzung des Roboters nach einem der Ansprüche 1 bis 16, der nach einem der Ansprüche 17 bis 20 montiert ist, zu Zwecken des Transports von Aktionsmodulen wie Kennzeichnungs-, Erfassungs- oder Angriffsposten, wobei die Logistik vorteilhafterweise im unter dem Träger angeordneten Volumen (14) angeordnet sein kann.

23. Nutzung des Roboters nach einem der Ansprüche 1 bis 16, der nach einem der Ansprüche 17 bis 20 montiert ist, zu Zwecken der Beobachtung und/oder Manipulation von Objekten umfassend einen ausfahrbaren Mast oder einen ausklappbaren Arm, wobei die hydraulischen und/oder elektrischen Komponenten dieser Masten oder Arme vorteilhafterweise im unter dem Träger angeordneten Volumen (14) angeordnet sein können.

## Claims

1. Modular transport land robot (100, 101), comprising a bearing module in the form of a longitudinal beam (11) having two end zones (Z1, Z2) and a supporting central zone (Z3), a remote control module (116) intended to control the robot (100, 101) and a modular drive (25, 26, 27) made up of at least two independent mobility units (9, 10, 28) comprising at least one propulsion unit borne by at least one and the other of the end zones (Z1, Z2) of the said longitudinal beam (11) and fixed, **characterized in that**, in the use mode, under these end zones (Z1, Z2) by securing modules (110), **in that** the or each propulsion unit comprises at least one heat engine (18) or electric motor (23), a transmission (120) and a set of running gear (13, 34), and **in that** the said mobility units (9, 10, 28) define between them, under the central zone (Z3) of the bearing longitudinal beam (11), an available volume (14) intended to transport at least one payload module (31, 32) so that the bearing longitudinal beam (11) is situated, in the use mode, above the propulsion units (9, 10, 28).

2. Land robot according to Claim 1, in which the payload (31, 32) can be arranged on and/or under the central zone (Z3) of the bearing longitudinal beam (11) .

3. Land robot according to either one of Claims 1 and 2, in which, with the robot having an overall length, the bearing longitudinal beam (11) has a length substantially equal to the said overall length.

4. Land robot according to any one of the preceding claims, in which the sets of running gear (13, 34) are wheelsets with wheels (12, 33), at least one of the sets of running gear having at least two wheels (12, 33).

5. Land robot according to any one of the preceding claims, in which the securing module (110) for each propulsion unit (9, 10, 28) is made up of a structure enveloping the propulsion unit (9, 10, 28) and supporting the set of running gear (12, 13), the structure being fixed under the longitudinal beam (11) .

6. Land robot according to any one of the preceding claims, in which each propulsion unit (9, 10, 28) has an autonomous energy reserve, namely one fuel tank (21) per heat-engine propulsion unit (9, 28) and an electric accumulator (24) per electric propulsion unit (10, 28).

7. Land robot according to any one of the preceding claims, in which the drive can be chosen between purely heat-engine (25), purely electric (27) and electric/heat-engine hybrid (26).

8. Land robot according to any one of the preceding claims, in which at least one mechanical attachment interface (29) and one electric supply interface (30), which are intended for at least one payload (31, 32) of the payload module, are installed on and/or under the bearing longitudinal beam (11).

9. Land robot according to the preceding claim, in which one of the propulsion units (9, 10, 28) is able to supply electrical energy to the electric supply interface (30), and another propulsion unit (9, 10, 28) is able to supply electrical energy to a payload and/or to a mission module comprising observation and/or detection systems, particularly cameras, sensors and/or radars.

10. Land robot according to any one of the preceding claims, in which the remote control module (116) intended to control the robot (100, 101) and, where appropriate, able to control at least one payload (31, 32) and/or the observation and/or detection means, the electric supply interface (30) for at least one payload (31, 32) and/or data processing module (16) are housed in the bearing longitudinal beam (11).

11. Land robot according to any one of the preceding claims, in which one propulsion unit (9, 10, 28) is able to supply the remote control module (116) with electrical energy and another propulsion unit (9, 10, 28) is able to supply at least one payload (31, 32) with electrical and/or mechanical energy.

12. Land robot according to any one of the preceding claims, in which the drive selected between heat-engine (25), hybrid (26) and electric (27) drive comprises two different or identical propulsion units (9, 10) each having a set of running gear (13) and being able to operate either as two-wheel (12) drive, or as four-wheel drive.

13. Land robot according to the preceding claim, in which the hybrid drive (26) can switch between two-wheel drive, with either electrical propulsion with the wheels driven only by the electric propulsion unit (10) or heat-engine drive with the wheels driven only by the heat-engine propulsion unit (9), and four-wheel drive with the driven wheels (12) driven by both propulsion units (9, 10).

14. Land robot according to any one of the preceding claims with two propulsion units, in which the wheels (33) of at least one of the propulsion units (9, 10) are able to be steered so that the robot (100) has one or more steered sets of running gear (34) .

15. Land robot according to any one of the preceding claims, in which the steering of each set of steered running gear is slaved to movement laws managed by the data processing module (16) in conjunction with the viewing and/or detection means.

16. Land robot according to any one of the preceding claims, in which towing means (37) are arranged in connection with one end of the beam (11), these towing means being able to be selected from a mechanically articulated drawbar and a motorized drawbar controlled by the robot remote control module, this drawbar being intended to be coupled to a suitable connection system (36) in particular comprising a towing ball or hook.

17. Method for assembling the modular transport land robot according to any one of the preceding claims, **characterized in that** it consists:
- in setting the length of a bearing longitudinal beam that forms a bearing module (11), according to the lengths of a drive module (25, 26, 27) and of a payload (31, 32);
- in fitting end zones (Z1, Z2) of the said beam (11) with attachment interfaces (114) for attachment modules for securing propulsion units (9, 10, 28) of the drive module (25, 26, 27) under these zones (Z1, Z2);
- in equipping a central zone (Z3) of the said beam (11) with at least one attachment interface (29) of the attachment module, so as to attach a payload (31, 32) of a payload module under the said beam (11), and with an electric supply module (30),
- in attaching an electric propulsion unit (9, 28) or heat-engine propulsion unit (10, 28) of the drive module at least under each end zone (Z1, Z2) of the said beam (11) using the attachment interfaces (114) and in connecting the electric supply interface (30) of the electric supply module to at least one propulsion unit (9, 10, 28) via a distribution connector (115),
- in attaching the payload module (31) under the central zone of the said beam (11) via the attachment interface (29) of the attachment module and in connecting the electric supply interface (30) to the payload module (31) via a supply connector, and
- in mounting a remote control module (116) of the robot in a housing created beforehand for this purpose in the said beam (11) and on this beam (11) via the attachment module, the remote control module (116) also being connected to the electric supply interface module (30).

18. Method of assembly according to the preceding claim, in which a payload (32) of the payload module is attached to the bearing longitudinal beam (11) via an attachment interface (29) of the attachment module, this payload (32) being able to comprise detection systems and/or observation systems.

19. Method of assembly according to either one of the preceding Claims 17 and 18, in which the electric supply interface module (30) is connected to the payload module comprising the payload (31) attached under the bearing longitudinal beam (11) and/or the payload (32) attached on the said beam (11).

20. Method of assembly according to any one of Claims 17 to 19, in which the detection systems and/or the observation systems are connected directly to an electric distribution connector of a propulsion unit (9, 10, 28), particularly in the electric propulsion unit (10, 28).

21. Use of the robot according to any one of Claims 1 to 16 and assembled according to any one of Claims 17 to 20, for applications of detecting objects buried beneath the ground, for carrying at least one mini robot, and for observation and/or detection from a raised position.

22. Use of the robot according to any one of Claims 1 to 16 and assembled according to any one of Claims 17 to 20, for applications of carrying action modules, such as acquisition, designation or engagement stations, it then advantageously being possible for the auxiliaries to be installed inside the volume (14) situated beneath the bearing beam.

23. Use of the robot according to any one of Claims 1 to 16 and assembled according to any one of Claims 17 to 20, for object observation and/or manipulation applications, comprising an erectable mast or a deployable arm, the hydraulic and/or electrical components of these masts or arms advantageously being able to be implanted inside the volume (14) situated beneath the bearing beam.
